# EUROPÄISCHE PATENTANMELDUNG

(11) **EP 2 662 653 A1**
(43) Veröffentlichungstag der Anmeldung: **13.11.2013**
(21) Anmeldenummer: 12003579.5
(22) Anmeldetag: 08.05.2012
(51) Int. Cl.: F25J 3/04, B01D 53/02, B01D 53/86

(54) **Verfahren und Vorrichtung zur Gewinnung von wasserstofffreiem Stickstoff**

(71) Anmelder: Linde Aktiengesellschaft, 80331 München (DE)
(72) Erfinder: Grahl, Matthias, Dr., 80639 München (DE); Schneider, Helko, 82515 Wolfratshausen (DE); Schwenk, Dirk, Dr., 85609 Aschheim (DE); von Gemmingen, Ulrich, Dr., 82541 Ammerland b. Münsing (DE)
(74) Vertreter: Imhof, Dietmar

(57) **Zusammenfassung**

Das Verfahren und die Vorrichtung dienen zur Gewinnung von wasserstofffreiem Stickstoff durch Tieftemperaturzerlegung von Luft. Wasserstoffhaltige Luft wird als Einsatzluftstrom (1) von einem Luftverdichter (2) angesaugt und verdichtet. Der verdichtete Einsatzluftstrom (4) wird in eine katalytische Reinigungseinheit (5) eingeleitet. In der katalytischen Reinigungseinheit (5) werden Kohlenmonoxid und Wasserstoff aus dem Einsatzluftstrom (4) entfernt. Aus der katalytischen Reinigungseinheit (5) wird ein gereinigter Einsatzluftstrom (6) entnommen. Der gereinigte Einsatzluftstrom (6) wird abgekühlt (7) und in eine Trennsäule (10) eingeleitet (8). Die Trennsäule (10) weist unmittelbar unterhalb ihres Kopfes einen Sperr-Stoffaustauschabschnitt (15) im Umfang von ein bis vier theoretischen beziehungsweise ein bis sechs praktischen Böden auf. Von einer Zwischenstelle der Trennsäule (10), die unmittelbar unterhalb des Sperr-Stoffaustauschabschnitts (15) angeordnet ist, wird ein wasserstofffreier Stickstoffstrom (16, 17) entnommen und als wasserstofffreies Stickstoffprodukt gewonnen. Die katalytische Reinigungseinheit (5) wird bei einer Temperatur von weniger als 50°C betrieben. Die katalytische Reinigungseinheit (5) enthält Hopcalit als einziges katalytisch aktives Material.

## Beschreibung

Die Erfindung betrifft ein Verfahren gemäß dem Oberbegriff des Patentanspruchs 1.

Unter "wasserstofffrei" wird hier ein Fluid verstanden, dessen Wasserstoffgehalt weniger als 10 Vppb, insbesondere weniger als 1 Vppb beträgt.

Als "wasserstoffhaltig" wird hier Luft bezeichnet, die mindestens 10 Vppb Wasserstoff enthält, insbesondere 100 Vppb und mehr.

Ein Verfahren der eingangs genannten Art ist aus US 5441719 bekannt. Hier wird die Einsatzluft vor der katalytischen Reinigungseinheit in einem Erhitzer auf eine Temperatur gebracht, die deutlich über der Umgebungstemperatur liegt. Die katalytische Reinigung wird also unter einer hohen Temperatur durchgeführt. Details wie ein Zahlenwert für die Betriebstemperatur oder die chemische Zusammensetzung des Katalysators sind zwar nicht angegeben, aber üblicherweise werden solche Katalysatoren bei Temperaturen von etwa 130 bis 160°C betrieben.

Außerdem ist bekannt, dass man allein mittels kryogener Rektifikation durch geeignetes Hinzufügen zusätzlicher Destillationsschritte in Form mindestens einer zusätzlichen Trennsäule eine beliebige gute Trennung des Wasserstoffs vom Stickstoff erzielen kann, zum Beispiel aus US 5205127, US 5218825 und EP 299364 B1 = US 4824453. Diese Verfahren sind aber apparativ aufwändig und damit kostenintensiv.

Der Erfindung liegt die Aufgabe zugrunde, ein Verfahren der eingangs genannten Art und eine entsprechende Vorrichtung wirtschaftlich günstiger zu gestalten, insbesondere durch Verringerung des apparativen Aufwands und/oder durch Verminderung des Energieverbrauchs.

Diese Aufgabe wird durch die Merkmale des kennzeichnenden Teils des Patentanspruchs 1 gelöst.

Im Rahmen der Erfindung wird die katalytische Reinigungseinheit bei einer Temperatur von weniger als 50°C, insbesondere weniger als 42°C betrieben. Insbesondere beträgt die Temperatur der Einsatzluft in der katalytischen Reinigungseinheit zwischen 10 und 50°C, vorzugsweise 20 bis 41 °C, höchst vorzugsweise 25 bis 35°C.

Die katalytische Reinigungseinheit enthält Hopcalit als einziges katalytisch aktives Material. Die wesentlichen Bestandteile von Hopcalit sind Oxide und Peroxide von Mangan und Kupfer, eventuell auch von Kobalt und Silber. Außer Silber sind keine weiteren Edelmetalle enthalten, insbesondere weder Platin noch Palladium, zumindest nicht in katalytisch aktivem Umfang.

Palladium- und Platinkatalysatoren, die üblicherweise zur Entfernung von Wasserstoff aus Luft bei niedriger Temperatur eingesetzt werden, sind im Vergleich zu Hopcalit bei zunächst hoher Aktivität wesentlich empfindlicher gegenüber Deaktivierungen, die insbesondere durch Luftspuren (wie Wasser, Kohlendioxid, Ruß, NOₓ, SOₓ, Halogenen, Staub oder Kohlenwasserstoffen) verursacht werden können, die auf der Oberfläche des Katalysators Belegungen erzeugen; außerdem sind sie wesentlich teurer als Hopcalit und unterliegen starken Preisschwankungen.

Hopcalit ist beispielsweise aus der Anwendung in Gasmasken bekannt und in großen Mengen kostengünstig auf dem Markt verfügbar. Kommerziell erhältlich ist solches Katalysatormaterial beispielsweise von Molecular Products Limited als Moleculite® oder von Carus Corporation als Carulite® 300.

Es ist an sich bekannt, die katalytische Reinigung von Einsatzluft für eine Tieftemperatur-Luftzenegungsantage bei relativ niedriger Temperatur durchzuführen, beispielsweise aus EP 438282 A1, EP 904823 A2, EP 1166845 A1, US 6096278, EP 799633 A1 oder EP 800046 A1. Alle diese Dokumente lehren jedoch, dass es zusätzlich zu dem Hopcalit, der zur CO-Entfernung dient, eines weiteren Katalysators, der Palladium oder Platin enthält, bedarf, wenn auch Wasserstoff aus dem Einsatzluftstrom entfernt werden soll.

Im Rahmen der Erfindung hat sich jedoch überraschenderweise herausgestellt, dass Hopcalit alleine geeignet ist, neben CO auch Wasserstoff aus der Einsatzluft in einem solchen Umfang zu entfernen, dass die Herstellung eines wasserstofffreien Stickstoff-Produktes in Verbindung mit einem Sperr-Stoffaustauschabschnitt in der Trennsäule möglich ist. Zwar benötigt man dafür eine größere Hopcalitmenge; dieses Material ist allerdings sehr viel kostengünstiger und weniger empfindlich für Deaktivierung als die bisher zur Wasserstoffentfemung genutzten Edelmetallkatalysatoren wie Palladium oder Platin.

Trotz des leicht erhöhten Aufwands im Tieftemperaturteil ergibt sich insgesamt ein kostengünstiges System. Dies gilt sowohl hinsichtlich des apparativen Aufwands als auch hinsichtlich eines besonders stabilen Betriebs.

Das "wasserstofffreie Stickstoffprodukt" wird bei der Erfindung flüssig oder gasförmig von der Zwischenstelle entnommen. Bei flüssiger Entnahme kann es stromabwärts der Entnahme verdampft und anschließend als gasförmiges Endprodukt gewonnen werden; alternativ wird es auf eine weitere Säule aufgegeben. In der weiteren Säule kann eine weitere Wasserstoffabtrennung durchgeführt werden, vorzugsweise werden dort jedoch keine weiteren Schritte zu Wasserstoffabtrennung vorgenommen. Von dieser weiteren Säule wird dann das Endprodukt gasförmig oder flüssig abgezogen. Die weitere Säule kann beispielsweise durch die Niederdrucksäule eines Zwei-SäulenSystems gebildet werden, das außerdem eine Hochdrucksäule enthält; in diesem Fall kann die HDS den Sperr-Stoffaustauschabschnitt enthalten.

In dem weiter unten erläuterten Ausführungsbeispiel der kryogenen Abreicherung des Wasserstoffs mittels Sperrböden erfolgt die Trennung in einer Einzelsäule, in deren unteren Bereich die abgekühlte Einsatzluft eingeleitet wird und die einen Kopfkondensator aufweist. Grundsätzlich kann das dort beschriebene Prinzip der Abreicherung des Wasserstoffs durch Sperrböden sinngemäß auch bei einem Zwei-oder Mehr-Säulen-System zur Stickstoff-Sauerstoff-Trennung eingesetzt werden.

Unterhalb des Kopfes der Trennsäule ist der "Sperr-Stoffaustauschabschnitt" angeordnet. Dieser kann aus einem Packungsabschnitt oder aus konventionellen Stoffaustauschböden ("Sperrböden") gebildet sein und weist einen Umfang von ein bis vier theoretischen Böden (bei der Verwendung von Packung) beziehungsweise ein bis sechs praktischen Böden (bei der Verwendung konventioneller Böden) auf. Der Abzug des Stickstoffprodukts unterhalb dieser Böden bewirkt eine Abreicherung an Verunreinigungen, die leichter flüchtig als Stickstoff sind. Das Produkt kann dort entweder flüssig oder gasförmig entnommen werden. Im Falle einer Flüssigentnahme ist der Abreicherungsgrad, bezogen auf den Wasserstoffgehalt der Luft nach dem Katalysator-System, besonders hoch und liegt im Bereich zwischen 20 und 90, insbesondere zwischen 25 und 35. Wenn das Stickstoffprodukt nicht als Flüssigkeit in einen Tank aufgegeben wird, sondern umgebungswarm als Gas abgegeben wird, muss die entnommene Flüssigkeit noch geeignet verdampft werden.

Vorzugsweise ist die katalytische Reinigungseinheit in mindestens zwei zyklisch umschaltbaren Behältern angeordnet, wobei in einer Beladungsphase der Einsatzluftstrom in mindestens einen der Behälter eingeleitet wird und in einer Regenerierphase ein Regenerierfluid in einen nicht im Beladungstakt befindlichen Behälter geleitet wird. Im einfachsten Fall wird dies durch ein Paar umschaltbarer Behälter realisiert. Mindestens einer der Behälter befindet sich immer in der Beladungsphase; damit kann der Einsatzluftstrom kontinuierlich gereinigt werden. Die Dauer einer Beladungsphase beträgt beispielsweise ein bis acht Stunden, vorzugsweise drei bis vier Stunden.

Grundsätzlich können jedoch auch drei oder mehr Behälter eingesetzt werden, wie es an sich aus Adsorptionsverfahren bekannt ist. Bei dem erfindungsgemäßen Verfahren kann es besonders vorteilhaft sein, die Reinigungseinrichtung zum Beispiel durch vier oder mehr Behälter zu realisieren, von denen sich immer zwei zeitversetzt in der Beladungsphase befinden. Dadurch lässt sich eine während einer Beladungsphase abnehmende Aktivität des Katalysators teilweise kompensieren, und der Verlauf der Wasserstoffkonzentration im gereinigten Einsatzluftstrom wird gleichmäßiger. Diese Verfahrensweise kann insbesondere bei besonders großen Anlagen eingesetzt werden.

Es ist günstig, wenn das Regenerierfluid unter einer Regeneriertemperatur von mindestens 80°C in die Reinigungseinheit eingeleitet wird. In der Regenerierphase ist also die Temperatur deutlich höher als in der Beladungsphase. Die Regeneriertemperatur beträgt beispielsweise 80°C bis 300°C, vorzugsweise 120°C bis 200°C. Es ist hilfreich, aber nicht unbedingt notwendig, dass das Regenerierfluid wasserstofffrei ist.

Im Rahmen der Erfindung hat sich herausgestellt, dass der Wasserstoffumsatz an Hopcalit mit zunehmender Laufzeit zurückgeht und nach zum Beispiel 24 Stunden Laufzeit praktisch keine Aktivität mehr vorhanden ist. Diese Deaktivierung kann aber durch geeignete Regenerierung (wie oben beschrieben) rückgängig gemacht werden. Beispielsweise wird durch eine Regenerierung bei 180°C, die nach drei bis vier Stunden durchgeführt wird, die ursprüngliche Aktivität wiederhergestellt.

Es ist außerdem vorteilhaft, wenn die katalytische Reinigungseinheit als kombinierte adsorptive und katalytische Reinigungseinheit ausgebildet ist und jeder ihrer Behälter in Strömungsrichtung des Einsatzluftstroms während der Beladungsphase mindestens die folgenden aktiven Schichten enthält:
- eine erste Adsorptionsschicht und
- eine katalytische Schicht aus Hopcalit.

Stromabwärts der katalytischen Schicht kann eine zweite Adsorptionsschicht angeordnet sein, in der die Reaktionsprodukte CO₂ und H₂O entfernt werden. Allerdings ist es auch möglich, dass die geringen Mengen an CO₂ und H₂O, die in der katalytischen Schicht gebildet werden, von der katalytischen Schicht selbst zurückgehalten werden und eine zweite Adsorptionsschicht entbehrlich ist.

Adsorptive und katalytische Reinigung der Einsatzluft sind damit integriert. Die adsorptive und katalytische Schichten werden synchron mit Einsatzluft beaufschlagt und regeneriert. Zusätzlich zu den genannten Schichten können weitere Adsorptionsschichten eingesetzt werden. Die erste Adsorptionsschicht dient dabei insbesondere der praktisch völlständigen Entfernung des in der Einsatzluft enthaltenen Wasserdampfs stromaufwärts des Hopcalits; zusätzlich wird auch Kohlendioxid entfernt. In einer zweiten Adsorptionsschicht können die Reaktionsprodukte CO₂ und H₂O adsorbiert werden, die in der katalytischen Schicht durch die Umsetzung von CO und Wasserstoff entstanden sind.

Es ist günstig, wenn die katalytische Schicht aus Hopcalit, die in der katalytischen Reinigungseinheit angeordnet ist, eine Schütthöhe von mindestens 25 cm, insbesondere von mindestens 30 cm aufweist. Unter "Schütthöhe" wird hier die Dicke der aktiven Schicht in Strömungsrichtung verstanden, die von der wasserstoffhaltigen Einsatzluft durchströmt wird. Die Luft strömt dabei mit einer Geschwindigkeit von 0,05 bis 0,2 m/s durch die katalytische Schicht.

Für die CO-Entfernung wird im genannten Geschwindigkeitsbereich eine Schütthöhe zwischen 10 und 20 cm eingesetzt. Dies reicht für die Wasserstoffabreicherung in Kombination mit dem Sperr-Stoffaustauschabschnitt zwar nicht aus; allerdings hat sich im Rahmen der Erfindung herausgestellt, dass nur eine mäßige Erhöhung der Schütthöhe erforderlich ist, um insgesamt die gewünschte Abreicherung zu erreichen. Je nach Geschwindigkeit und Schütthöhe kann zum Beispiel eine WasserstoffAbreicherung um einen Faktor 1000 erzielt werden.

Die Erfindung betrifft außerdem eine Vorrichtung gemäß Patentanspruch 6. Die erfindungsgemäße Vorrichtung kann durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand eines in den Zeichnungen schematisch und stark vereinfacht dargestellten Ausführungsbeispiels näher erläutert.

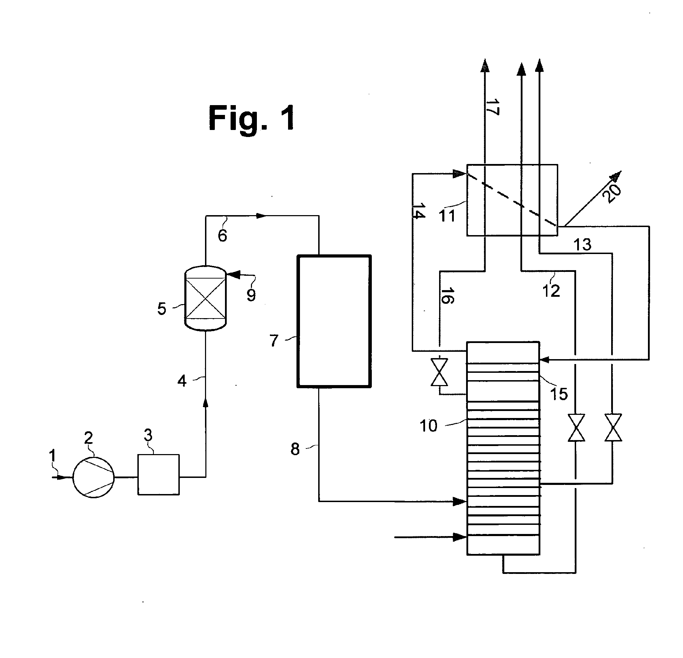

In Figur 1 saugt ein Luftverdichter 2 35.000 Nm³/h eines wasserstoffhaltigen Einsatzluftstroms 1 aus der Atmosphäre an. Der wasserstoffhaltige Einsatzluftstrom 1 ist mit einer Reihe von Verunreinigungen belastet, insbesondere mit
H₂: 0,5 Vppm
CO: 1 Vppm
CO₂: 400 Vppm
H₂O: 4300 Vppm (Wassergehalt nicht am Punkt 1, sondern am Punkt 4, also nach Verdichtung 2, Kühlung 3 und nicht dargestellter Wasserabscheidung)

In dem Luftverdichter 2 wird der Einsatzluftstrom 1 auf einen Druck von 12 bar verdichtet und anschließend in einer Kühleinrichtung 3 abgekühlt. Der verdichtete und abgekühlte Einsatzluftstrom 4 tritt unter einer Temperatur von 33°C in eine kombinierte adsorptive und katalytische Reinigungseinheit 5 ein, die zwei identische Behälter mit kombinierter Adsorbens- und Katalysatorfüllung aufweist. Die beiden Behälter werden wechselweise beladen und regeneriert. Die Dauer einer Beladungsphase (Taktzeit) beträgt 4 h.

Jeder dieser Behälter weist einen Durchmesser von 3,7 m und eine Schüttung einer Gesamthöhe von 1,77 m auf. Die Schüttung wird vom Luftstrom von unten nach oben durchströmt und weist von unten nach oben folgende Schichten auf (in Klammern ist jeweils die Hauptwirkung der entsprechenden Schicht angegeben):
1. Aktiviertes Aluminium (Adsorption von H₂O) - Schütthöhe 0,20 m
2. Molekularsieb 13X (Adsorption von CO₂) - Schütthöhe 1,04 m
3. Hopcalit (CO-und H₂-Umwandlung in CO₂ beziehungsweise H₂O) - Schütthöhe 0,32 m
4. Molekularsieb 13X (Adsorption von CO₂ und H₂O) - Schütthöhe 0,21 m

Am Austritt des Behälters, der sich in der Beladungsphase befindet, sind die Verunreinigungen in dem gereinigten Einsatzluftstrom 6 auf die folgenden Werte reduziert:
H₂: < 5 Vppb (mindestens um Faktor 100 abgereichert)
CO: < 0,2 Vppb
CO₂: < 0,1 Vppb
H₂O: < 0,1 Vppb

Der andere Behälter befindet sich in der Regenerierphase und wird von einem Regeneriergas 9 durchströmt, das in dem Beispiel aus 69 % Stickstoff und 31 % Sauerstoff besteht und gegenüber der Atmosphäre nur leichten Überdruck aufweist. Die Regeneriertemperatur beträgt in dem Beispiel 180°C.

Über einen Hauptwärmetauscher 7, in dem sie gegen Rückströme (nicht dargestellt) abgekühlt wird, und Leitung 8 wird die gereinigte Einsatzluft 6 in eine Trennsäule 10 eingeleitet, die in dem Ausführungsbeispiel als Einzelsäule zur Stickstoff-Sauerstoff-Trennung ausgebildet ist. Die Trennsäule 10 weist einen Kopfkondensator 11, aber keine Sumpfheizung und keinen sonstigen weiteren Kondensator auf.

Bis auf die im Folgenden erläuterten Sperrböden und die Verdampfung der entnommenen Flüssigkeit 16 im Kopfkondensator 11 entspricht der extrem vereinfacht dargestellte Tieftemperaturteil des Ausführungsbeispiels demjenigen der EP 773417 A2.

Der Kopfkondensator 11 wird auf der Verdampfungsseite im Forced-Flow-Betrieb ' gefahren, das heißt die Kühlflüssigkeiten 12, 13, 16, die mittels der Wärme des kondensierenden Kopfstickstoffs 14 verdampft werden, durchströmen die Verdampfereinheit 11 nur einmal. Die verdampfte Kühlflüssigkeit 12 kann nach Teil-Anwärmung im Hauptwärmetauscher 7, arbeitsleistender Entspannung sowie erneuter Anwärmung im Hauptwärmetauscher (nicht dargestellt) als Regenerierfluid 9 eingesetzt werden.

Als gasförmiges Stickstoffprodukt wird gemäß der Erfindung nicht ein Teil des gasförmigen Kopfstickstoffs 14 der Trennsäule 10 verwendet. Vielmehr wird von einer Zwischenstelle der Trennsäule 10, die unmittelbar unterhalb eines Sperr-Stoffaustauschabschnitts 15 angeordnet ist, ein flüssiger wasserstofffreier Stickstoffstrom 16 entnommen und im Kopfkondensator 11 verdampft. Mit dem Spülstrom 20 wird ein wesentlicher Anteil des mit der Luft in die Säule eingebrachten Wasserstoffs aus der Säule entfernt. Um für die Verdampfung des flüssigen Stickstoffstroms 16 ein treibendes Temperaturgefälle zu erzielen, muss der Luftdruck bei gleichem Produktabgabedruck erhöht werden. Dies steigert die Leistungsaufnahme der Anlage um typischerweise 2 % und muss bei einem gesamten Kostenvergleich mitberücksichtigt werden. Stromabwärts des Kopfkondensators 11 wird der wasserstofffreie Stickstoffstrom 17 in dem Hauptwärmetauscher 7 weiter auf etwa Umgebungstemperatur angewärmt (nicht dargestellt) und schließlich als wasserstofffreies Stickstoffprodukt gewonnen.

Der Sperr-Stoffaustauschabschnitt 15 wird in dem Ausführungsbeispiel durch wenige, typischerweise ein bis sechs, Siebböden (praktische Böden) gebildet. Die beiden übrigen Stoffaustauschabschnitte der Trennsäule 10 werden ebenfalls durch Siebböden gebildet. Alternativ können auch andere Stoffaustauschelemente wie zum Beispiel Packungen eingesetzt werden. Das wasserstofffreie Stickstoffprodukt enthält typischerweise weniger als 1 Vppb Wasserstoff, zum Beispiel 0,5 Vppb. Er wird beispielsweise bei der Halbleiterherstellung (Chipindustrie) eingesetzt.

Bei dem vorgestellten Verfahren reichert sich der Wasserstoffgehalt im Stickstoffprodukt typischerweise um den Faktor 30 gegenüber der Luft nach dem Molsieb-Katalysator-System ab.

Zahlenbeispiel:
- Umgebungsluft mit 500 Vppb H₂.
- Abreicherung im Hopcalit-Katalysator um den Faktor 100 ergibt 5 Vppb H₂ in der Luft nach dem Katalysator.
- Abreicherung durch die kryogene Rektifikation mittels Sperrböden um den Faktor 30 ergibt 0,15 Vppb im Stickstoffprodukt.

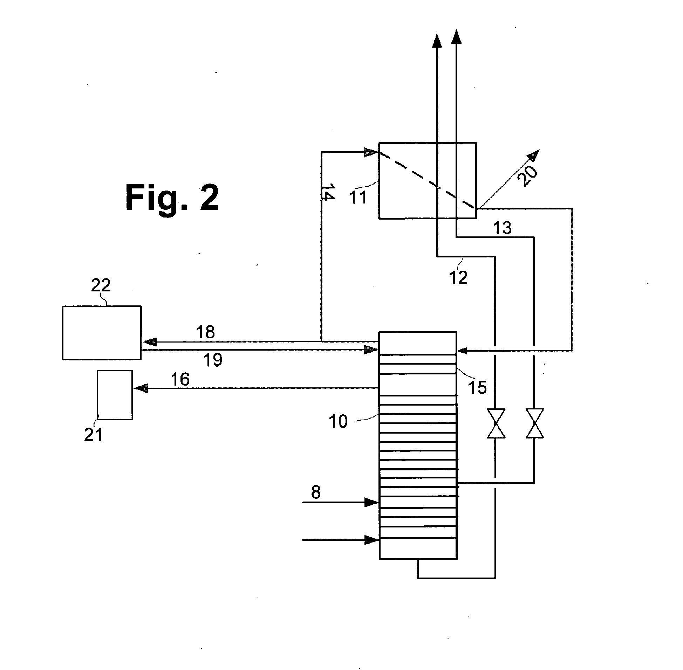

Das Ausführungsbeispiel der Figur 2 unterscheidet sich dadurch vom Verfahren der Figur 1, dass der wasserstofffreie Stickstoffstrom unmittelbar als Stickstoffprodukt in flüssiger Form in einen Flüssigtank 21 gegeben wird. Dadurch entfällt der Verdampfungsschritt des Stroms 16 in der Verdampfereinheit 11. Die Leitung 18 liefert gasförmigen Stickstoff zu einer Verflüssigereinheit 22, welche über eine Leitung 19 den verflüssigten Stickstoff in die Säule zurückspeist.

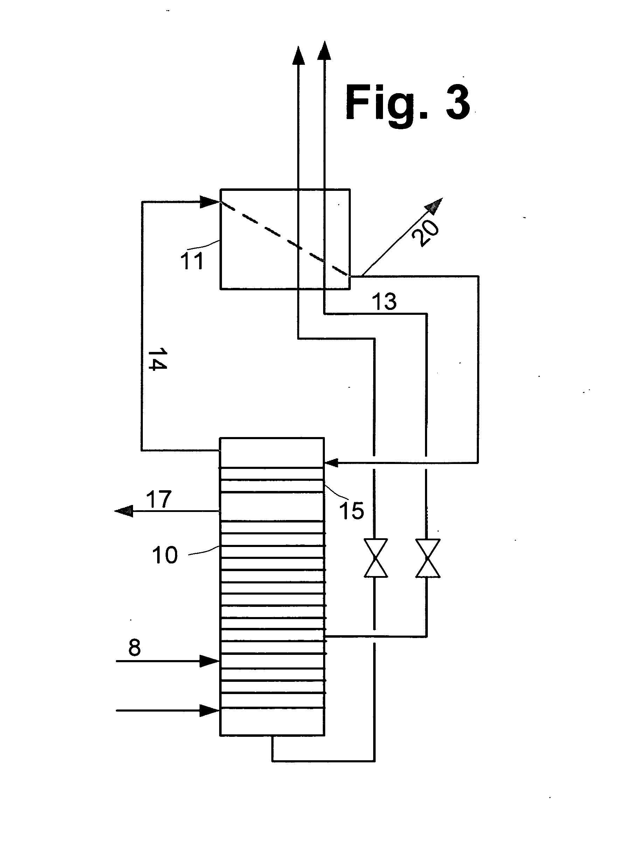

In einer weiteren Variante, die in Figur 3 dargestellt ist, wird der wasserstofffreie Stickstoff 17 gasförmig unterhalb der Sperrböden entnommen. Bei dieser Variante ist die Wasserstoffabreicherung zwar geringer, jedoch steigt dadurch auch nicht die Leistungsaufnahme der Anlage.

## Patentansprüche

1. Verfahren zur Gewinnung von wasserstofffreiem Stickstoff durch Tieftemperaturzerlegung von Luft, bei dem
- wasserstoffhaltige Luft als Einsatzluftstrom (1) von einem Luftverdichter (2) angesaugt und verdichtet wird,
- der verdichtete Einsatzluftstrom (4) in eine katalytischen Reinigungseinheit (5) eingeleitet wird,
- in der katalytischen Reinigungseinheit (5) Kohlenmonoxid und Wasserstoff aus dem Einsatzluftstrom (4) entfernt werden,
- aus der katalytischen Reinigungseinheit (5) ein gereinigter Einsatzluftstrom (6) entnommen wird,
- der gereinigte Einsatzluftstrom (6) abgekühlt (7) und in eine Trennsäule (10) eingeleitet (8) wird,
- die Trennsäule (10) unmittelbar unterhalb ihres Kopfes einen Sperr-Stoffaustauschabschnitt (15) im Umfang von ein bis vier theoretischen beziehungsweise ein bis sechs praktischen Böden aufweist und
- von einer Zwischenstelle der Trennsäule (10), die unmittelbar unterhalb des Sperr-Stoffaustauschabschnitts (15) angeordnet ist, ein wasserstofffreier Stickstoffstrom (16, 17) entnommen und als wasserstofffreies Stickstoffprodukt gewonnen wird,
**dadurch gekennzeichnet, dass**
- die katalytische Reinigungseinheit (5) bei einer Temperatur von weniger als 50°C betrieben wird,
- wobei die katalytische Reinigungseinheit (5) Hopcalit als einziges katalytisch aktives Material enthält.

2. Verfahren nach Anspruch 1, **dadurch gekennzeichnet, dass** die katalytische Reinigungseinheit (5) in mindestens zwei zyklisch umschaltbaren Behältern angeordnet ist, wobei in einer Beladungsphase der Einsatzluftstrom (4) in mindestens einen der Behälter eingeleitet wird und in einer Regenerierphase ein Regenerierfluid (9) in einen nicht im Beladungstakt befindlichen Behälter geleitet wird.

3. Verfahren nach Anspruch 2, **dadurch gekennzeichnet, dass** das Regenerierfluid (9) unter einer Regeneriertemperatur von mindestens 80 °C in die Reinigungseinheit eingeleitet wird.

4. Verfahren nach einem der Ansprüche 1 bis 3, **dadurch gekennzeichnet, dass** die katalytische Reinigungseinheit (5) als kombinierte adsorptive und katalytische Reinigungseinheit ausgebildet ist und jeder ihrer Behälter in Strömungsrichtung des Einsatzluftstroms während der Beladungsphase mindestens die folgenden aktiven Schichten enthält:
- eine erste Adsorptionsschicht und
- eine katalytische Schicht aus Hopcalit.

5. Verfahren nach einem der Ansprüche 1 bis 4, **dadurch gekennzeichnet, dass** die katalytische Reinigungseinheit eine katalytische Schicht aus Hopcalit mit einer Schütthöhe von mindestens 25 cm, insbesondere von mindestens 30 cm aufweist.

6. Vorrichtung zur Gewinnung von wasserstofffreiem Stickstoff durch Tieftemperaturzerlegung von Luft, mit
- Mitteln zum Zuführen wasserstoffhaltiger Luft als Einsatzluftstrom (1) zu einem Luftverdichter (2),
- einer katalytischen Reinigungseinheit (5) zum Entfernen von Kohlenmonoxid und Wasserstoff aus dem in dem Luftverdichter (2) verdichteten Einsatzluftstroms(4),
- Mittel zum Abkühlen (7) und Einleiten (8) in eine Trennsäule (10) des in der katalytischen Reinigungseinheit (5) gereinigten Einsatzluftstroms (6),
- wobei die Trennsäule (10) unmittelbar unterhalb ihres Kopfes einen Sperr-Stoffaustauschabschnitt (15) im Umfang von ein bis vier theoretischen beziehungsweise ein bis sechs praktischen Böden aufweist,
- mit Mitteln zum Entnehmen eines wasserstofffreien Stickstoffstroms (16, 17) von einer Zwischenstelle der Trennsäule (10), die unmittelbar unterhalb des Sperr-Stoffaustauschabschnitts (15) angeordnet ist, und
- mit Mitteln zum Gewinnen des wasserstofffreien Stickstoffstroms als wasserstofffreies Stickstoffprodukt,
**dadurch gekennzeichnet durch, dass**
- dass stromaufwärts der katalytischen Reinigungseinheit (5) keine Vorrichtung zum Erwärmen des Einsatzluftstroms angeordnet ist und,
- die katalytische Reinigungseinheit (5) Hopcalit als einziges katalytisch aktives Material enthält.

7. Vorrichtung nach Anspruch 6, **dadurch gekennzeichnet, dass** die Vorrichtung so ausgebildet ist, dass die katalytische Reinigungseinheit (5) im Betrieb der Anlage mit einer Temperatur von weniger als 50°C betrieben wird und insbesondere entsprechende Regelungsmittel für die Temperatur des Einsatzluftstroms (4) stromaufwärts der katalytischen Reinigungseinheit aufweist.
